# EUROPÄISCHE PATENTANMELDUNG

(11) **EP 1 785 225 A1**
(43) Veröffentlichungstag der Anmeldung: **16.05.2007**
(21) Anmeldenummer: 06023072.9
(22) Anmeldetag: 06.11.2006
(51) Int. Cl.: B23Q 11/12, B23Q 11/14

(54) **Kugelgewindetrieb für Werkzeugmaschinen**

(30) Priorität: 15.11.2005 DE 202005017823 U
(71) Anmelder: DECKEL MAHO Pfronten GmbH, 87459 Pfronten (DE)
(72) Erfinder: Geissler, Alfred, 87459 Pfronten (DE); Jung, Robert, 87459 Pfronten (DE)
(74) Vertreter: Beetz & Partner

(57) **Zusammenfassung**

Gegenstand der Erfindung ist ein Kugelgewindetrieb für Werkzeugmaschinen, mit einer drehbar gelagerten hohlen Gewindespindel (1), mit einem Antriebsaggregat (3) für die Gewindespindel (1), mit einer auf der Gewindespindel längs beweglich angeordneten Mutter (4) und mit einem Kühlsystem der Gewindespindel (1), das einen Zulaufanschluss (12) und einen Ablaufanschluss (13) für eine im Inneren der hohlen Gewindespindel fließende Kühlflüssigkeit aufweist. Zur Erzielung einer verbesserten Kühlleistung bei geringem technischem Aufwand sind im Innenraum der hohlen Gewindespindel (1) ein Zulaufkanal (15) und ein mit diesem kommunizierender Rücklaufkanal (16) angeordnet, und der Zulaufanschluss (12) und der Ablaufanschluss (13) sind am gleichen Ende der Gewindespindel (1) angeordnet.

## Beschreibung

Die Erfindung betrifft einen Kugelgewindetrieb für Werkzeugmaschinen mit einer drehbar gelagerten hohlen Gewindespindel, einem Antriebsaggregat für die Gewindespindel, einer auf der Gewindespindel längs beweglich angeordneten Mutter als Treiber für ein Maschinenteil und mit einem Kühlsystem der Gewindespindel, das einen Zulaufanschluss und einen Ablaufanschluss für eine im Inneren der hohlen Gewindespindel fließenden Kühlflüssigkeit aufweist.

Kugelgewindetriebe werden insbesondere in Werkzeugmaschinen eingesetzt, um Maschinenteile, beispielsweise Tische, Schlitten, Gehäuse, od. dgl., translatorisch in einer der Koordinatenachsen zu bewegen. Da diese Maschinenteile in modernen Werkzeugmaschinen häufig erhebliche Massen haben und mit hohen Geschwindigkeiten über kürzere oder auch längere Strecken verfahren werden, sind relativ hohe Antriebsleistungen notwendig. Obgleich durch den Kugelumlauf die Reibungsverluste insgesamt in Grenzen gehalten werden, ergeben sich doch bei hohen Antriebsleistungen erhebliche Erwärmungen der Spindel selbst sowie auch der auf der Spindel längs bewegten Mutter. Um die Nachteile dieser Erwärmungen zu vermeiden, sind bei modernen Kugelgewindetrieben Kühlsysteme vorgesehen, bei denen in der Regel eine Kühlflüssigkeit in dem als durchgehende Längsbohrung ausgeführten Innenraum der hohlen Gewindespindel im Durchlauf geführt wird. Durch Dosierung der in die Spindel eingeführten Flüssigkeitsmengen kann die Effizienz der gewünschten Kühlwirkung entsprechend den jeweiligen Betriebsbedingungen und den Temperaturen der Spindel gewählt werden. Nachteilig bei diesem bekannten Kühlsystem ist jedoch der Umstand, dass an jedem Endteil der Gewindespindel ein Kühlflüssigkeitsanschluss mit entsprechenden Zu- und Ablaufleitungen vorgesehen werden muss. Dadurch erhöht sich nicht nur der technische Gesamtaufwand, sondern die getrennte Positionierung der Zu- und Abflussanschlüsse jeweils an einem Spindelende erhöht auch den Raumbedarf und behindert den Zugang zu anderen Maschinenteilen.

Aufgabe der Erfindung ist es, einen leistungsfähigen Kugelgewindetrieb für Werkzeugmaschinen zu schaffen, der ein günstiger positioniertes und technisch einfaches Kühlsystem aufweist.

Diese Aufgabe wird bei einem Kugelgewindetrieb für Werkzeugmaschinen der im Oberbegriff des Anspruchs 1 angegebenen Gattung erfindungsgemäß dadurch gelöst, dass im Innenraum der hohlen Gewindespindel ein Zulaufkanal und ein mit diesem kommunizierender Rücklaufkanal angeordnet sind, wobei der Zulaufanschluss für den Zulaufkanal und der Ablaufanschluss des Rücklaufkanals am gleichen Ende der Gewindespindel angeordnet sind.

Durch die Unterteilung des Innenraums der hohlen Gewindespindel in einen sich vorzugsweise über die gesamte Länge erstreckenden Zulaufkanal und in einen mit diesem kommunizierenden Rücklaufkanal gleicher Länge ergibt sich gegenüber den bekannten Kühlsystemen eine Verdoppelung der gesamten Kanallänge, was zu einer erhöhten Kühlwirkung führt. Von besonderer Bedeutung ist allerdings die gemeinsame Anordnung der beiden Anschlüsse, d.h. des Zulaufanschlusses und des Ablaufanschlusses, an einem Ende der Gewindespindel. Die gesamten Flüssigkeitsarmaturen erhalten eine konzentrierte Anordnung, was nicht nur raumsparend ist, sondern zu einer erheblichen Vereinfachung des Kühlmittel-Leitungssystems führt.

Zweckmäßig weist die Gewindespindel an ihrem einen Ende ein Verschlussglied auf, das den Innenraum abschließt und gleichzeitig als Halter für ein Ende eines im Innenraum der Gewindespindel angeordneten Rohrs dient. Dieses Rohr unterteilt den Innenraum in eine radial äußere Ringkammer und eine innere zylindrische Kammer, die durch Verbindungsöffnungen im Endabschnitt des Rohrs miteinander kommunizieren. Jeweils ein Kühlflüssigkeitsanschluss ist der äußeren Ringkammer und der inneren Kammer zugeordnet.

Im folgenden wird ein Ausführungsbeispiel der Erfindung anhand der Zeichnung im einzelnen beschrieben. Es zeigen:
- Fig. 1: einen Kugelgewindetrieb für Werkzeugmaschinen im Längsschnitt;
- Fig. 2: einen vergrößerten Ausschnitt X in Fig. 1;
und
- Fig. 3: einen vergrößerten Ausschnitt Y in Fig. 1.

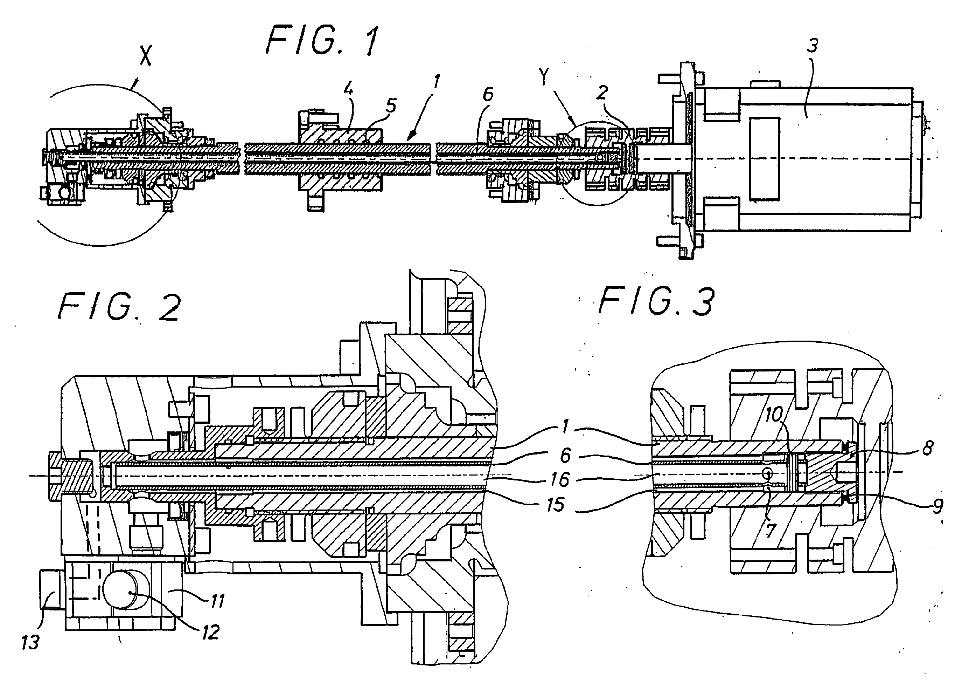

Der dargestellte Kugelgewindetrieb weist eine Gewindespindel 1 auf, die mit dem in Fig. 1 dargestellten rechten Endteil über eine Kupplungsanordnung 2 drehfest mit einem Antriebsaggregat 3 verbunden ist. Bei diesem Antriebsaggregat 3 handelt es sich in der Regel um einen E-Motor mit oder ohne integriertem Getriebe. Auf der Spindel 1 ist eine Mutter 4 über einen Kugelumlauf 5 längs verfahrbar angeordnet, die an einem nicht dargestellten Bauteil der Werkzeugmaschine befestigt ist und als Treiber bzw. Antriebsglied zum Verfahren dieses Bauteils in Längsrichtung der Gewindespindel 1 dient.

Der insoweit herkömmliche Kugelgewindetrieb verfügt über ein Kühlsystem, das eine intensive Kühlung der Gewindespindel 1 über ihre gesamte Länge durch eine zirkulierende Kühlflüssigkeit bewirkt. Wie aus den Figuren 2 und 3 ersichtlich, ist in dem durchgehenden zylindrischen Innenraum der Spindel 1 ein durchgehendes Rohr 6 zentriert angeordnet, das in seinem hinteren Endbereich mehrere Verbindungsöffnungen 7 aufweist. Das in Fig. 3 dargestellte Ende des Rohrs 6 ist in einem Verschlusspfropfen 8 festgelegt, der in das Endstück der Gewindespindel eingesetzt, z.B. eingeschraubt, und durch einen O-Ring 9 abgedichtet ist. Zusätzlich ist der Endteil des Rohrs 6 noch durch einen Querzapfen 10 in der Gewindespindel 1 gesichert.

Der in Fig. 2 dargestellte Abschnitt der Gewindespindel 1 und des in deren Innenraum eingebauten Rohres 6 enthält Armaturen für die Zufuhr einer Kühlflüssigkeit in den unterteilten Innenraum der Gewindespindel. In einer Armatur 11 sind zwei Anschluss-Stutzen 12, 13 vorgesehen, die mit - nicht dargestellten - Zu- und Ablaufleitungen für Kühlflüssigkeit verbunden werden. Der Anschluss-Stutzen 12 steht über eine innere Kanalführung 14 mit dem radial äußeren Ringraum 15 des Innenraums der Gewindespindel 1 in Strömungsverbindung. Dieser äußere Ringraum 15 kommuniziert über die in Fig. 3 dargestellten Verbindungsöffnungen 7 mit dem zentralen Innenraum 16 des Rohrs 6. Dieser Innenraum 16 ist über - in Fig. 2 gestrichelt angedeutete - Kanäle mit dem Anschluss 13 verbunden.

Zu Erzielung einer besonders wirksamen Kühlung der gesamten Spindel wird Kühlflüssigkeit über den Anschluss 11 in den äußeren Ringraum 15 des Spindelinnenraums 6 mit einem gewissen Druck eingeführt. Diese Kühlflüssigkeit durchströmt den Ringraum 15 über die gesamte Spindellänge und fließt über die endseitigen Öffnungen 7 in den Innenraum 16 des Rohrs 6. Über die inneren Kanäle und den Ablauf 13 wird dieses rückgeführte Kühlmittel in das Kühlsystem der Maschine zurückgeleitet.

Die Erfindung ist nicht auf die dargestellte Ausführung beschränkt. So können statt des Rohres 6 auch andere Mittel eingesetzt werden, um den Innenraum der hohlen Gewindespindel zu unterteilen. Durch spezifische Anordnung und Verteilung von Durchflussöffnungen kann der Flüssigkeitsumlauf beeinflusst werden.

## Patentansprüche

1. Kugelgewindetrieb für Werkzeugmaschinen, mit
- einer drehbar gelagerten hohlen Gewindespindel (1),
- einem Antriebsaggregat (3) für die Gewindespindel (1),
- einer auf der Gewindespindel längs beweglich angeordneten Mutter (4) und
- einem Kühlsystem der Gewindespindel (1), das einen Zulaufanschluss (12) und einen Ablaufanschluss (13) für eine im Inneren der hohlen Gewindespindel fließende Kühlflüssigkeit aufweist,
**dadurch gekennzeichnet, dass**
- im Innenraum der hohlen Gewindespindel (1) ein Zulaufkanal (15) und ein mit diesem kommunizierender Rücklaufkanal (16) angeordnet sind, und
- der Zulaufanschluss (12) und der Ablaufanschluss (13) am gleichen Ende der Gewindespindel (1) angeordnet sind.

2. Kugelgewindetrieb nach Anspruch 1,
**dadurch gekennzeichnet, dass**
die Gewindespindel (1) an ihrem einen Ende ein Verschlussglied (8) aufweist, das den Innenraum der Gewindespindel abschließt.

3. Kugelgewindetrieb nach Anspruch 1 oder 2,
**dadurch gekennzeichnet, dass**
der Innenraum der Gewindespindel (1) durch ein Rohr (6) in eine radial äußere Ringkammer (15) und eine innere Kammer (16) unterteilt ist.

4. Kugelgewindetrieb nach Anspruch 2 oder 3,
**dadurch gekennzeichnet, dass**
das Ende des Rohrs (6) im Verschlussglied (8) befestigt ist.

5. Kugelgewindetrieb nach Anspruch 4,
**dadurch gekennzeichnet, dass**
im Endabschnitt des Rohrs (6) Verbindungsöffnungen (7) vorgesehen sind.
